# EUROPEAN PATENT SPECIFICATION

(11) **EP 3 098 430 B1**
(45) Date of publication and mention of the grant of the patent: **04.09.2019**
(21) Application number: 15169613.5
(22) Date of filing: 28.05.2015
(51) Int. Cl.: F02M 21/02, F02M 65/00, F02D 19/02, F02D 19/06, B63H 21/22, B63H 21/38

(54) **VESSEL GAS SYSTEM WITH DOUBLE-WALLED GAS VALVE UNIT**
GASSYSTEM FÜR SCHIFF MIT DOPPELWANDIGER VENTILEINHEIT
CIRCUIT DE GAZ POUR NAVIRE AVEC UNITÉ DE VANNES DE GAZ À DOUBLE PAROI

(43) Date of publication of application: 30.11.2016
(73) Proprietor: Caterpillar Motoren GmbH & Co. KG, 24159 Kiel (DE)
(72) Inventor: TUEXEN, Thorsten, 24214 Gettorf (DE); HAAS, Stefan, 24107 Quarnbek / OT Flemhude (DE); VOGLER, Finn, 23611 Bad Schwartau (DE)
(74) Representative: BRP Renaud & Partner mbB Rechtsanwälte Patentanwälte Steuerberater

(56) References cited:
- EP-A1- 2 740 918
- EP-A1- 2 818 674
- WO-A1-2008/000898
- WO-A1-2015/040267

## Description

### Technical Field

The present disclosure generally relates to gas systems for vessel based internal combustion engines such as gaseous fuel operated internal combustion engines and dual fuel internal combustion engines, and more particularly to efficiently providing gaseous fuel to an internal combustion engine.

### Background

In marine applications, internal combustion engines may be operated with liquid fuel and/or gaseous fuel. To provide gaseous fuel (herein also referred to as fuel gas), a vessel gas system is provided on board of the vessel. The vessel gas system fluidly connects a fuel gas tank with the engine. Usually, the vessel gas system comprises a storage pressure section and an engine pressure section, wherein the pressure is controlled within a gas valve unit via a flow control valve.

In general, the regulations of the marine classification society require vessel gas systems to be provided with a double wall system. Therefore, double walled piping may be applied as well as providing specific housings or rooms on the vessel for respective sections of the vessel gas system.

For service, maintenance, or when fuel gas is not stored on board, the vessel gas system may be flushed with inert gas, usually nitrogen.

A method for operating a dual fuel internal combustion engine in a gaseous fuel mode and a liquid fuel mode is disclosed, for example, in EP 2 740 918 A1. WO 2015/040267 A1 discloses a fuel storage and delivery system for a sea-going vessel that comprises an evaporator for vaporizing liquid gas or a pressure reducing valve, and an engine- specific fuel input subsystem for delivering vaporized gas from said evaporator or pressure reducing valve to an engine of said sea-going vessel. A tank room constitutes a gastight enclosure, in which said evaporator or pressure reducing valve is located. Said fuel input subsystem is also located inside said tank room. Moreover, EP 2 740 918 A1 and EP 2 818 674 A1 disclose control aspects of dual fuel engines.

The present disclosure is directed, at least in part, to improving or overcoming one or more aspects of prior systems.

This object is achieved by the subject-matter of the independent claims. Further developments of the invention are given in the dependent claims.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic overview of a vessel gas system for an internal combustion engine on board a vessel;
Fig. 2 is a schematic illustration of an exemplary implementation of a mini gas valve unit in a vessel gas systems;
Fig. 3 is a schematic illustration of another exemplary implementation of a mini gas valve unit in a vessel gas systems;
Figs. 4 and 5 show exemplary flow diagrams of flushing procedures using gas valve units as illustrated, for example, in Figs. 2 and 3; and
Fig. 6 shows an exemplary flow diagram of operation procedures using gas valve units as illustrated, for example, in Figs. 2 and 3.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that one may provide a structural independent unit for a gas valve unit that allows installations in marine vessels close to the engine, in particular to small packaging dimensions, which are allowed by a small number of essential parts. Due to the reduced size, installation on board within the engine room is possible, thereby reducing in general the space requirements on board as well as the expenses for installation. For example, it was realized that by using a gas valve unit as disclosed herein, the flexibility for the provided piping of the vessel gas system is increased. In particular, distances of less than 10 m between the gas valve unit and the engine may be provided, thereby allowing an improvement in the engine control due to reduced volumes that need to be considered.

It was further realized that to provide for a minimum size gas valve unit, one may split the hardware to two locations, i.e. the mini gas valve unit and the gas storage side of the vessel gas system. It was realized that this may reduce required hardware, create a smaller envelope for components located close to the engine, and move the minimum gas valve unit closer to the engine (thereby improving dynamic response of the gas pressure in the gaseous fuel providing rail to the engine and generally improving the dynamic of the engine in gas mode. Moreover, a more flexible installation in the distance of the double wall piping may be achieved, and it may be possible to avoid (or at least reduce the requirements and elements needed for) inert gas flushing of the double walled space (hardware and software features).

Moreover, it was further realized that an engine may be operated with gas fuel up to the minimum gas pressure when a respective master gas valve is closed in view of the reduced volumes as, for example, gas pressure fluctuations may be avoided or at least reduced.

In general, it was realized that the herein disclosed gas valve units allow for a dynamic operation of the engine with respect to pressure and control speed. For example, the herein disclosed concepts may improve a dynamic response of gas pressure in the rail distributing the gaseous fuel to the engine, thereby improving the dynamic of the engine in gaseous fuel mode Moreover, the respective configurations may allow using gaseous fuel efficiently, by pushing the same (e.g. at low pressures) by inert gas supply towards combustion.

The present disclosure is further based in part on the realization that in particular for flushing a double walled gas system of a marine gas engine, the gas valve unit as disclosed herein may allow configurations that enable simplified flushing with inert gas.

Furthermore, the proposed concept is based on the usual existence of a master gas valve despite the existence of a gas valve unit in a vessel implementation. Based thereon, this master gas valve may be assigned to function as the first block valve in a block and bleed configuration. It is noted that that master gas valve may be supported by the yard or gas handling equipment supplier for installation, while the gas valve unit may be provided by the engine supplier. Accordingly, also the below described bleed valve may need to be added close to the master gas valve, to relax the gas pipe system.

In conclusion, it was proposed that a herein as mini(mum) referred gas valve unit (min GVU) may comprise, for example, a (downstream) block valve for forming a block and bleed configuration, sensors such as pressure sensors and temperature sensor, a gas regulator for regulating the supplied amount of gaseous fuel in gaseous fuel operation mode, and two flushing (inert gas) valves for flushing the vessel gas system. The gas valve unit may further be configured to include a particle filter if needed such as, for example, during commissioning of the vessel.

Based thereon, venting of the gas supply lines downstream of the mini GVU's block valve to the engine may be based using a ventilation valve mounted onto the engine. On the other side, one controls a relatively larger volume from the min GVU/engine to the master gas valve. By reducing the dimensions of the GVU to a "minimum" it may be feasible, to integrate a potential housing of the mini GVU into the double space volume of the piping between engine and GVU. Furthermore, this volume may be expanded up to the 1^{st} shut off valve (here master gas valve). Thereby, the number of double walled and to be monitored volumes may be reduced. In some embodiments, the double walled to be monitored volumes may even be reduced to one single volume subject to leakage monitoring and/or flushing.

In the context of the herein disclosed concepts, a flow control valve is a gaseous fuel pressure regulating element. In particular, the flow control valve may allow decreasing the supply pressure, i.e. the pressure provided by a gaseous fuel supply source, to the required pressure for operating the engine, specifically for mixing the gaseous fuel with charge air. In some embodiments, a main function of the flow control valve may be to adjust the opening area of the valve to provide for a required gas flow. This gas flow in combination with the existing gas volume downstream of the control valve may cause a pressure change in this volume upstream of the gas admission valves.

A main function of the block valve is to shut off the fuel gas supply in a very short time period without the usage of external energy. For opening the block valve, external energy (usually pneumatic air) may be used.

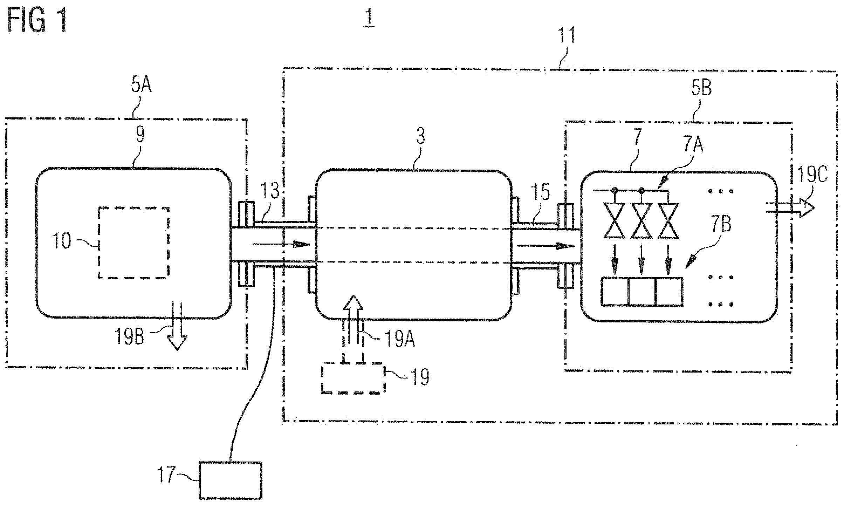

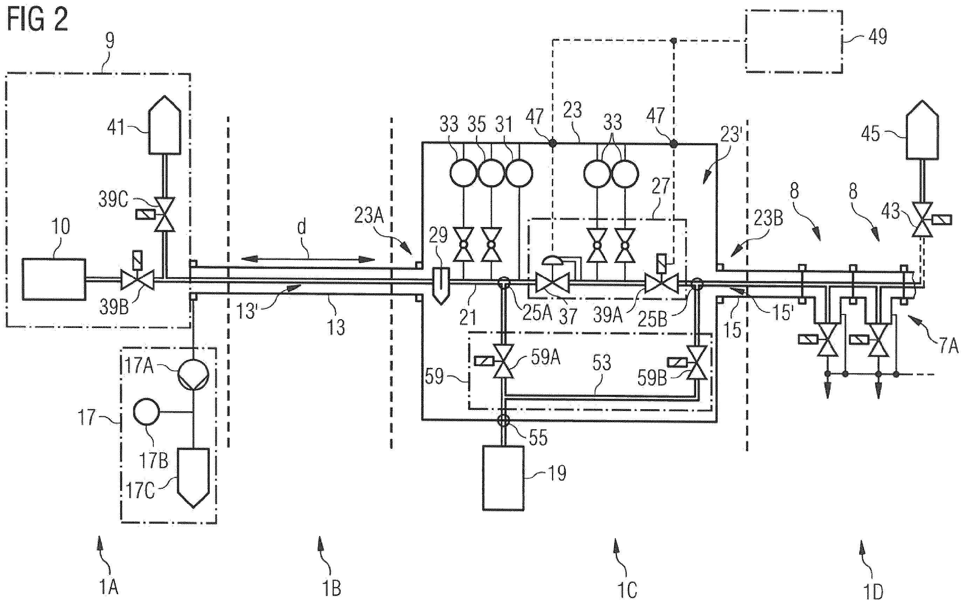

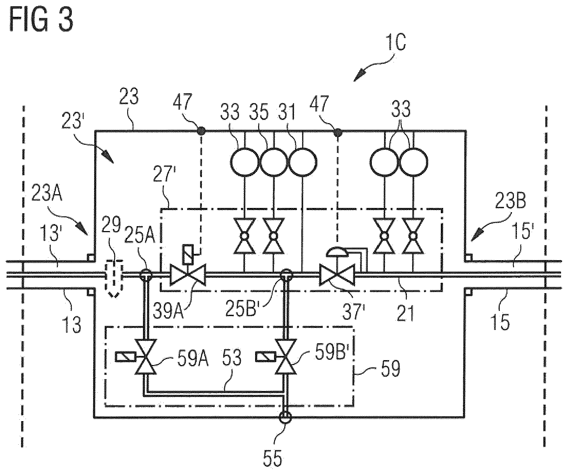

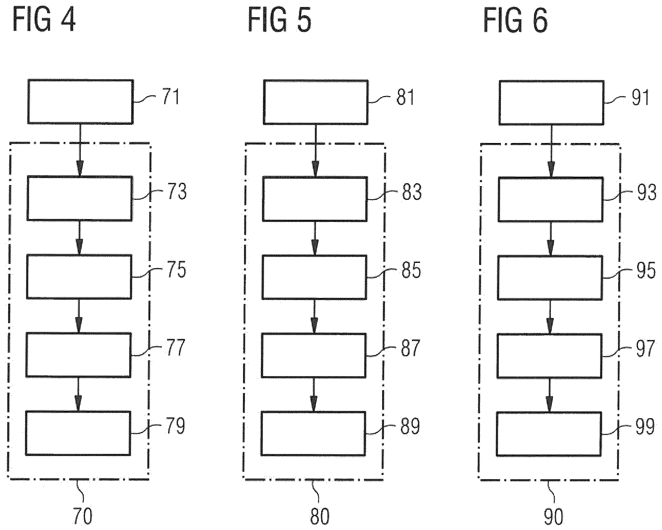

In connection with Fig. 1, a schematic overview of an exemplary gas system of a gas or dual fuel internal combustion engine is described. In connection with Figs. 2 and 3 exemplary configurations of a gas valve unit are described. Various operation procedures are then described in connection with Fig. 4 to Fig. 6.

Fig. 1 shows schematically a vessel gas system 1 that is based on a gas valve unit 3. Gas valve unit 3 forms the interface between a storage pressure section 5A and an engine pressure section 5B of the vessel gas system 1.

The herein disclosed concept of gas valve unit 3 allows positioning gas valve unit 3 relatively close to an internal combustion engine 7 and relatively far away from a fuel gas storage unit 9 usually comprising one or more tanks 10. Accordingly, gas valve unit 3 and engine 7 form essentially an engine related part 11 of vessel gas system 1 because - except for some piping section extending further away from the engine to connect with fuel gas storage unit 9 - most of gas valve unit 3 may be located directly at or next to engine 7.

As required, for example, for marine applications, gas valve unit 3 and engine 7 are provided as a double walled system. Specifically, a double walled fuel supply storage line 13 connects in the embodiment of Fig. 1 fuel gas storage unit 9 with gas valve unit 3. In some embodiments, double walled fuel supply storage line 13 may extend, for example, over several ten meters. A double walled fuel supply engine line 15 fluidly connects gas valve unit 3 with a respective double walled fuel system of engine 7 and - in contrast to double walled fuel supply storage line 13 - may extend only up to several meters, for example not more than 10 m.

In general, the double walled system of gas valve unit 3 is monitored with respect to gas/gaseous fuel leakage by one or more monitoring system(s) 17. In some embodiments, monitoring system 17 may - in addition to the double walled system of gas valve unit 3 - monitor the double walled system of engine 7 as exemplarily shown, for example, in Fig. 2.

In the herein disclosed concept for flushing at least sections of the storage pressure section 5A of vessel gas system 1, gas valve unit 3 comprises a flushing access for receiving (schematically indicated by arrow 19A), for example, pressurized nitrogen from an inert gas supply system 19.

In general, the inert gas required for flushing may be provided by inert gas supply system 19 at a pressure beyond the gaseous fuel supply pressure. In dependence of the performed flushing, a first venting exit may be provided at fuel gas storage unit 9 (schematically indicated by arrow 19B) and a second venting exit may be provided at engine 7 (schematically indicated by arrow 19C). As will be discussed further below, in compact configurations as allowed by the herein disclosed concepts, inert gas supply system 19 may also allow to efficiently use rest amounts of fuel, for example during switch over processes between fuel types.

As schematically indicated for completeness in Fig. 1, internal combustion engine 7 comprises inter alia a gaseous fuel system 7A for providing cylinder units 7B in a controllable manner with gaseous fuel. A double-walled gaseous fuel system is disclosed, for example, in EP 2 589 787 A1.

As will become apparent from the following description of exemplary embodiments of gas valve unit 3, the herein disclosed concepts are based on a gas valve unit having (only) one block valve that in combination with a master valve provided within storage pressure section 5A may form a double block and bleed system as shown in Figs. 2 and 3. The system also allows flushing of the storage pressure section side of gas valve unit 3 including double walled fuel supply storage line 13 and flushing of the engine side of gas valve unit 3 including double walled fuel supply engine line 15 and respective section of the engine's fuel system.

In Fig. 2, an exemplary embodiment of gas valve unit 3 is schematically shown in detail. In general, gas valve unit 3 is configured as a double walled fuel gas control module for vessel gas system 1. Vessel gas system 1 is exemplarily split into four section 1A to ID, wherein section 1A includes the gas handling room with gas storage, filtering etc. Moreover, section 1B indicates the space between the engine and the gas handling room (for example being at a distance d of several ten meters), and section 1C is essentially gas valve unit 3 that is positioned in particular as close as possible to engine 7 positioned in section ID (representing the gaseous fuel engine system mounted at the engine).

Gas valve unit 3 comprises a fuel line 21 (shown in Fig. 2 as a double line within gas valve unit 3) for, in the mounted state, fluidly connecting fuel gas storage unit 9 with gaseous fuel system 7A of engine 7.

In the exemplary embodiment in Fig. 2, gaseous fuel system 7A comprises a sequence of double walled fuel pipe sections 8, each including inter alia a solenoidal gas admission valve (SOGAV) for admitting preset and adjustable amounts of gaseous fuel into pressurized charge air in a cylinder specific manner as controlled by a control system (not shown). The control system similarly may control gas valve unit 3, for example by controlling valve operation and receiving measurement data.

Fuel line 21 is provided within a housing 23 of gas valve unit 3. Housing 23 is configured to be airtight such that fuel line 21 forms (as - sections of - an inner wall) together with housing 23 (as an outer wall) a double walled system. Housing 23 houses the various parts, usually "single walled" elements such as pipes, sensors, and valves.

Housing 23 comprises a fuel gas inlet 23A, and a fuel gas outlet 23B. Fuel line 21 fluidly connects fuel gas inlet 23A and fuel gas outlet 23B, respectively for connecting with double walled fuel supply storage line 13 and double walled fuel supply engine line 15, specifically the inner gaseous fuel guiding pipe volumes. Fuel line 21 comprises a sequence of components including components such as components, for example, for controlling a gas flow, measuring pressure, measuring flow, measuring temperature, and, in some operation modes/phases filtering particles as will be described below. The structure of housing 23 is configured to withstand, for examples, pressures up to 16 bar and to be gas tight. In some embodiments, housing 23 comprises to or more parts that allow for accessing an inner volume 23' of housing 23. The parts may be mounted such as screwed together in a manner that fulfills the above structural requirements. In contrast to embodiments where ventilated rooms house gas fuel components for controlling the gaseous fuel supply, housing 23 is a closed system and its inner volume 23' may be used to monitor any gas leakage.

Outer monitoring volumes 13', 15' between the double walls of the double walled fuel supply storage line 13 and double walled fuel supply engine line 15, respectively, may be used for monitoring a gas leakage. In some embodiments, those outer monitoring volumes (one or both) may be fluidly connected (at fuel gas inlet 23A and/or fuel gas outlet 23B) to inner volume 23' of housing 23, thereby forming an extended or even a single volume for monitoring vessel gas system 1. Exemplarily, monitoring system 17 is indicated at the gas storage side of double walled fuel supply storage line 13 for the case of monitoring a single volume.

Monitoring system 17 comprises, for example, a vacuum pump 17A, a gas sensor 17B, and some venting configuration 17C for permanent ventilation of the double walled piping system. Furthermore, the system may be equipped with an inert gas connection (not shown) for inerting operations of the double walled piping (inner and outer gas pipe).

Moreover, fuel line 21 comprises flushing (storage side and/or engine side) access points 25A, 25B and a fuel control line section 27.

As schematically shown in Fig. 2, flushing access points 25A, 25B are fluidly positioned between fuel gas inlet 23A and fuel control line section 27, and fuel gas outlet 23B and fuel control line section 27, respectively.

As further shown exemplarily in Fig. 2, a filter unit 29 (for example mounted only during an installation phase of engine 7) as well as a sequence of temperature transducer 31, pressure transducers 33, and/or pressure indicators 35 may be positioned between fuel gas inlet 23A and fuel control line section 27 or throughout fuel line 21. Exemplarily, additional pressure indicators and pressure transducers are schematically illustrated within fuel control line section 27 as exemplarily described below. In general, the transducers and indicators may be associated with respective access points provided at housing 23.

In the configuration of Fig. 2, fuel control line section 27 may comprise a flow control valve 37 for regulating the pressure provided to gaseous fuel system 7A, and, thus, for controlling the pressure drop between storage pressure section 5A and engine pressure section 5B.

Fuel control line section 27 may further comprise a block valve 39A for forming a double block and bleed valve system - together with a block valve 39B and a bleed valve 39C provided upstream of double walled fuel supply storage line 13 within fuel gas storage unit 9 in section 1A. Block valve 39B may, for example, be the master valve of fuel gas storage unit 9 for blocking the fluid connection to tank 10.

In general, the thereby formed double block and bleed valve system may ensure a required separation of gaseous fuel system 7A from fuel gas storage unit 9.

Bleed valve 39C is fluidly connected to a safety bleed/venting line 41, which allows releasing any gaseous fuel to a safe location at ambience in case one of block valves 39A, 39B fails to close. In general, bleed valve 39C and safety bleed/venting line 41 may be used for flushing the storage pressure section side of gas valve unit 3 including double walled fuel supply storage line 13.

Furthermore, within fuel control line section 27, and specifically between flow control valve 37 and block valve 39A, a sequence of for example two pressure transducers 33 are provided for controlling or monitoring the operation of flow control valve 37.

Similarly, for flushing of the engine side of gas valve unit 3 including double walled fuel supply engine line 15 and respective section of the engine's fuel system, a venting valve 43 is provided at, for example, the engine gaseous fuel system and is fluidly connected via a venting line 45 to a safe location at ambience.

Thereby, a system is formed that allows guiding any pressurized gaseous fuel out of gas valve unit 3 to the ambience, if required.

Moreover, housing 23 comprises several control ports 47 for connecting gas valve unit 3 with an instrumented air system 49. Instrumented air system 49 is configured for, for example, controlling flow control valve 37, for example, via an IP converter as well as block valve 39A via electric means. Respective operation of flow control valve 37 as well as block valves 39A, 39B and venting valve 43 are known in the art.

With respect to the flushing concepts disclosed herein, flushing access points 25A, 25B are connected via flushing lines 53 and a flushing valve system 59 to an inert gas inlet 55 provided at housing 23. Each of flushing access points 25A, 25B can be fluidly connected to/or disconnected from inert gas inlet 55 via, for example, normally closed flushing valves 59A and 59B provided by flushing valve system 59, respectively. In some embodiments, a three way valve may replace/incorporate the same. Respective control ports may be again provided at housing 23. Inert gas inlet 55 may be connected to inert gas supply system 19 to provide for the flushing procedure disclosed herein for vessel gas system 1.

During a specific inert gas flushing procedure and assuming a respective operation of flushing valves 59A and 59B, safety bleed/venting line 41 and venting line 45 allow relieving gaseous fuel (flushed out by inert gas) from gas valve unit 3 to the ambience.

In contrast to the embodiment disclosed in connection with Fig. 3, the configuration of fuel control line section 27 in Fig. 2 separates during liquid fuel operation (e.g. Diesel or heavy fuel oil operation) flow control valve 37 from any charge air that may leak into double walled fuel pipe sections 8 through the SOGAVs. However, the position of flushing access point 25A upstream of flow control valve 37 results in a - although small - portion of fuel line 21 (specifically the portion between flow control valve 37 and block valve 39A) not being actively flushable.

Fig. 3 shows another embodiment of gas valve unit 3 having in particular a slightly reversed order of elements within fuel control line section 27. Fig. 3 focusses on section 1C of vessel gas system 1. The remaining sections may, for example, be similarly configured as shown in Figs. 1 and 2. In Fig. 3, reference numerals for elements that in general are similar to or identical with the ones discussed above in context with Figs. 1 and 2 are maintained for clarity. For the respective features and functions it is referred to the forgoing description. This relates, for example, to fuel line 21, housing 23, piping, and valves/sensors and their connections.

However, in contrast to the embodiment of Fig. 2, a flow control valve 37' is positioned downstream of a block valve 39A'. In line with the embodiment of Fig. 2, block valve 39A' forms again with block valve 39B and bleed valve 39C of fuel gas storage unit 9 (see section 1A of Fig. 1) a double block and bleed valve system.

Also in contrast to the embodiment of Fig. 2, the position of a flushing access point 25B' for flushing the engine side differs as the same is located upstream of flow control valve 37' and, thus, between flow control valve 37' and block valve 39A'.

Thus, due to the positioning of access points 25A', 25B' at the side of block valve 39A' in the embodiment of Fig.3, the flushing of the storage pressure section side as well as the flushing of the engine side do not include any not-flushed volume. However, flow control valve 37' may be subject to gases flowing upstream with in fuel line 21 from SOGAVs in the gaseous fuel system.

As will be understood by the skilled person, the below described flushing procedures as well as the operation of engine 7 in gaseous fuel mode are essentially equally applicable to the above described configurations of the fuel control line section as well as respective modifications within the context of this disclosure.

The above described embodiments of gas valve units are applicable to gas engines and dual fuel engines, in particular for marine applications that require a gas regulating device and a double block and bleed valve to shut off the gas supply redundantly. The compact configurations may be cost efficiently implemented in contrast to known gas valve unit implementations that may be much larger, more expensive and difficult to integrate due to their size into existing engine rooms.

Thus, the above described embodiments of gas valve units may allow retrofitting in marine configurations with only limited space being available. Thereby, the required performance functions of a gas valve unit to relax the gaseous fuel from the gas valve unit to engine after an alarm will be maintained.

### Industrial Applicability

As will be described below, gas valve unit 3 allows providing two types of flushing procedures being described in connection with Figs. 4 and 5. Similarly, gas valve unit 3 allows using remaining gaseous fuel when switching a dual fuel internal combustion engine from gaseous fuel operation to liquid fuel operation as will be described in connection with Fig. 6.

In general, as will become apparent to the skilled person from the configuration of gas valve unit 3, flushing may require to provide an inert gas pressure that provides a safety overpressure with respect to the maximum gas pressure upstream of flow control valve 37. For example, upstream of flow control valve 37, a fuel gas pressure may be in the range of 6.5 to 9.5 barg, while downstream of flow control valve 37, a fuel gas pressure may be in the range of 0.5 to 6 barg, the latter being regulated for operating internal combustion engine 7 at varying output power levels. Accordingly, inert gas supply system 19 may be configured to provide inert gas at a pressures that is at least about 0.5 bar (safety pressure difference) above the fuel gas pressure upstream of flow control valve 37. For example, in view of the specific configuration of flushing valve system 59, an inert gas pressure of about 10 barg may be needed.

Referring to Fig. 2, the following flushing procedures may be performed by using inert gas inlet 55 to provide an inert gas such as pressurized nitrogen to gas valve unit 3. Moreover, storage side access point 25A of fuel line 21 and engine side access point 25B, 25B' allow for a flexible starting point for providing the inert gas to fuel line 21.

In reference to Fig. 4, the operation of a system for flushing a gas storage side of a gaseous fuel system such as vessel gas system 1 shown in Figs. 1 to 3 is disclosed. In general, the features for flushing include inter alia gas valve unit as described herein that specifically includes block valve 39A in fuel line 21, flushing valve system 59, and inert gas inlet 55. Gas valve unit 3 further is fluidly connected via double walled fuel supply storage line 13 to fuel gas storage unit 9 having master gas valve 39B, bleed valve 39C, and safety bleed/venting line 41.

Referring to Fig. 4, for performing a flushing procedure 70, providing such a system is indicated as step 71. Based thereon, block valve 39A is closed (step 73). Flushing valve system 59 and bleed valve 39C are configured (step 75) to provide a fluid connection from inert gas inlet 55 via storage side access point 25A of fuel line 21 to safety bleed/venting line 41 of fuel gas storage unit 9. For example, second (e.g. normally closed) flushing valve 59B stays closed, while first (e.g. normally closed) flushing valve 59A is opened. Alternatively, a three-way valve may be switched accordingly.

Then, in step 77, inert gas is provided at inert gas inlet 55 and the inert gas is flushed (step 79) from inert gas inlet 55 via the section of gas valve unit 3 being upstream of storage side access point 25A and via double walled fuel supply storage line 13 out of fuel gas storage unit 9 via safety bleed/venting line 41.

Thereby, one may flush inert gas from inert gas inlet 55 via the respective section of gas valve unit 3 to fuel gas storage unit 9, and, for example, via bleed valve 39C at some location at fuel gas storage unit 9 into the ambience. Accordingly, fuel gas storage unit 9 will be flushed with inert gas starting from gas valve unit 3, specifically starting from flushing valve system 59.

In reference to Fig. 5, the operation of a system for flushing an engine side of a gaseous fuel system such as vessel gas system 1 shown in Figs. 1 to 3 is disclosed. In general, the features for flushing include inter alia gas valve unit as described herein that specifically includes block valve 39A in fuel line 21, flushing valve system 59, and inert gas inlet 55. Gas valve unit 3 further is fluidly connected via double walled fuel supply engine line 15 to gaseous fuel system 7A of internal combustion engine 7.

Referring to Fig. 5, for performing a flushing procedure 80, providing such a system is indicated as step 81. Based thereon, block valve 39A is closed (step 83). Flushing valve system 59 is configured (step 85) to provide a fluid connection from inert gas inlet 55 via engine side access point 25B, 25B' of fuel line 21 to a venting outlet of gaseous fuel system 7A. For example, first (e.g. normally closed) flushing valve 59A stays closed, while second (e.g. normally closed) flushing valve 59B is opened. Alternatively, a three-way valve may be switched accordingly.

Then, in step 87, inert gas is provided at inert gas inlet 55 and the inert gas is flushed (step 89) from inert gas inlet 55 via the section of gas valve unit 3 being downstream of the engine side access point 25B, 25B' out of the gaseous fuel system 7A.

While in the above, flushed gases were disclosed to be released into, for example, the ambience, use of those flushed gases may be performed in some alternative embodiments.

In reference to Fig. 6, the operation of a system for switching between operation modes of a dual fuel engine are described using, for example, for gaseous fuel operation a gaseous fuel system such as vessel gas system 1 shown in Figs. 1 to 3 and for liquid fuel operation liquid fuel system as known in the art.

The herein disclosed concepts for gas valve unit, may allow switching from gaseous fuel operation to liquid fuel operation by flushing an engine side of vessel gas system 1 of the dual fuel internal combustion engine.

In general, the features for switching between operation modes include inter alia a gas valve unit as described herein that specifically includes block valve 39A in fuel line 21, flushing valve system 59, and inert gas inlet 55. Gas valve unit 3 further is fluidly connected via double walled fuel supply storage line 13 to fuel gas storage unit 9 having master gas valve 39B, bleed valve 39C, and safety bleed/venting line 41 as well as being fluidly connected via double walled fuel supply engine line 15 to gaseous fuel system 7A.

Referring to Fig. 5, for performing a switching procedure 90, providing such a system is indicated as step 91. Based thereon, block valve 39A and/or the master gas valve 39B are closed (step 93). Flushing valve system 59 is configured (step 95) to provide a fluid connection from inert gas inlet 55 via fuel line 21 to gaseous fuel system 7A. For example, first (e.g. normally closed) flushing valve 59A stays closed, while second (e.g. normally closed) flushing valve 59B is opened or the other way round. Alternatively, a three-way valve may be switched accordingly.

Then, in step 97, liquid fuel operation of the internal combustion engine is initiated and the inert gas is provided at inert gas inlet 55 and flushed (step 99) from inert gas inlet 55 together with remaining gaseous fuel from within gas valve unit 3 to the charge air for the liquid fuel operation.

The inert gas may be added to fuel line 21 of gas valve unit 3 at storage side access point 25A upstream of block valve 39A and/or at engine side access point 25B, 25B' downstream of block valve 39A.

In the context herein, upstream means at the side of the fuel supply side and downstream means at the engine side of the flow gaseous fuel flow direction. In particular within the mini GVU, upstream means towards the side of a fuel gas inlet and downstream means towards the side of a fuel gas outlet of the fuel line.

While in connection with, for example, Fig. 2 and Fig. 3, some normally closed valves are indicated as electrical valves, one or more of those valves may be similarly configured as electro pneumatic valves, for example.

For completeness, it is noted that the exemplary mini GVU as disclosed herein may be installable in a dual fuel engine of the series M27 to M46 DF by Caterpillar Motoren GmbH & Co. KG.

Although the preferred embodiments of this invention have been described herein, improvements and modifications may be incorporated without departing from the scope of the following claims.

## Claims

1. A vessel gas system (1) for providing an internal combustion engine with gaseous fuel, the vessel gas system (1) comprising:
a fuel gas storage unit (9) with a master gas valve (39B);
a double walled fuel supply storage line (13);
a double walled gas valve unit (3);
a double walled fuel supply engine line (15); and
a gaseous fuel system (7A);
wherein the double walled gas valve unit (3) comprises
a housing (23) providing an outer wall of the double walled gas valve unit (3) and comprising a fuel gas inlet (23A), a fuel gas outlet (23B), and an inert gas inlet (55),
a fuel line (21) fluidly connected to the fuel gas inlet (23A) and the fuel gas outlet (23B) and extending within the housing (23), thereby forming an inner wall of the double walled gas valve unit (3), wherein the fuel line (21) comprises a flow control valve (37) and a block valve (39A),
a flushing line (53), and
a flushing valve system (59), wherein
the flushing line (53) is fluidly connected to the inert gas inlet (55),
the flushing line (53) is fluidly connected via the flushing valve system (59) to a storage side access point (25A) of the fuel line (21) and to an engine side access point (25B, 25B') of the fuel line (21), and
the storage side access point (25A) is fluidly positioned between the fuel gas inlet (23A) and the block valve (39A) and the engine side access point (25B, 25B') is fluidly positioned between the block valve (39A) and the fuel gas outlet (23B); and
the fuel gas inlet (23A) of the fuel line (21) of the double walled gas valve unit (3) is fluidly connected with the master gas valve (39B) of the fuel gas storage unit (9) via the double walled fuel supply storage line (13) and the fuel gas outlet (23B) of the fuel line (21) of the double walled gas valve unit (3) is fluidly connected with the gaseous fuel system (7A)via the double walled fuel supply engine line (15).

2. The vessel gas system (1) of claim 1, wherein the flow control valve (37) is fluidly positioned between the fuel gas inlet (23A) and the block valve (39A), and in particular between the storage side access point (25A) and the block valve (39A).

3. The vessel gas system (1) of claim 1, wherein the flow control valve (37) is fluidly positioned between the block valve (39A) and the fuel gas outlet (23B), and in particular between the engine side access point (25B') and the fuel gas outlet (23B).

4. The vessel gas system (1) of any one of the preceding claims, wherein the flushing valve system (59) comprises
a first flushing valve (59A) for controlling the fluid connection between the inert gas inlet (55) and the storage side access point (25A), and
a second flushing valve (59B, 59B') for controlling the fluid connection between the inert gas inlet (55) and the engine side access point (25B, 25B'),
wherein the first flushing valve (59A) and/or the second flushing valve (59B, 59B') being in particular a normally closed valve.

5. The vessel gas system (1) of any one of the preceding claims, further comprising
one or more control elements selected from the group of control elements comprising temperature transducers (31), pressure transducers (33), and pressure indicators (35) provided at the fuel line (21); and/or
a mounting section for having a filter unit (29) mounted thereto, wherein the mounting section is in particular fluidly positioned between the fuel gas inlet (23A) and the flow control valve (37).

6. The vessel gas system (1) of any one of the preceding claims, wherein the housing (23)
is made of one or more parts and/or is made of a metal such as steal; and/or
further comprises at least two pressurized air control ports (47) for controlling the block valve (39A) and the flow control valve (37), respectively, by in particular pressurized air; and/or
further comprises control ports for, in particular electronically, controlling the flushing valve system (59) such as the first flushing valve (59A) and/or the second flushing valve (59B, 59B').

7. The vessel gas system (1) of any one of the preceding claims, wherein the block valve (39A) is the only block valve in the fuel line (21) and is in particular configured as a normally closed valve and/or the flow control valve (37) is configured to provide for a pressure drop for allowing the control of the gaseous fuel operation.

8. The vessel gas system (1) of any one of the preceding claims , wherein
the fuel gas storage unit (9) further comprises a bleed valve (39C) and a safety bleed/venting line (41), and
the master gas valve (39B) and the block valve (39A, 39A') form a double block and bleed valve system having the bleed valve (39C) connecting the intermediate fuel piping between the master gas valve (39B) and the block valve (39A, 39A') with the safety bleed/venting line (41); and
wherein the master gas valve (39B) is in particular a normally closed valve.

9. The vessel gas system (1) of any one of the preceding claims, further comprising
a monitoring system (17) for monitor in particular the air tightness of the double walled gas valve unit (3); and/or
an inert gas supply system (19) fluidly connected to the inert gas inlet (55) of the housing (23) of the gas valve unit (3); and/or
an instrumented air system (49) for controlling the flow control valve (37) and/or the block valve (39A); and/or
a control unit for controlling the operation of the block valve (39A), the master gas valve (39B), and the flow control valve (37).

10. The vessel gas system (1) of any one of the preceding claims, wherein the gaseous fuel system (7A) is further configured to release gas, and in particular comprises a venting outlet, for example at a downstream side of the gaseous fuel system (7A).

11. A method for flushing a gas storage side of a vessel gas system (1), the method comprising:
providing (step 71) a vessel gas system (1) according to any one of the preceding claims with a gas valve unit (3) having a block valve (39A) in a fuel line (21), a flushing valve system (59), and an inert gas inlet (55), and the gas valve unit (3) further being fluidly connected via a double walled fuel supply storage line (13) to a fuel gas storage unit (9) having a master gas valve (39B), a bleed valve (39C), and a safety bleed/venting line (41);
closing (step 73) the block valve (39A);
configuring (step 75) the flushing valve system (59) and the bleed valve (39C) to provide a fluid connection from the inert gas inlet (55) via an storage side access point (25A) of the fuel line (21) to the safety bleed/venting line (41) of the fuel gas storage unit (9);
providing (step 77) inert gas at the inert gas inlet (55); and
flushing (step 79) the inert gas from the inert gas inlet (55) via the section of the gas valve unit (3) being upstream of the storage side access point (25A) and via the double walled fuel supply storage line (13) out of the fuel gas storage unit (9) via the safety bleed/venting line (41).

12. A method for flushing an engine side of a vessel gas system (1), the method comprising:
providing (step 81) a vessel gas system (1) according to any one of claims 1 to 10 with a gas valve unit (3) having a block valve (39A) in a fuel line (21), a flushing valve system (59), and an inert gas inlet (55), and the gas valve unit (3) further being fluidly connected via a double walled fuel supply engine line (15) to an gaseous fuel system (7A) of an internal combustion engine (7);
closing (step 83) the block valve (39A);
configuring (step 85) the flushing valve system (59) to provide a fluid connection from the inert gas inlet (55) via an engine side access point (25B, 25B') of the fuel line (21) to a venting outlet of the gaseous fuel system (7A);
providing (step 87) inert gas at the inert gas inlet (55); and
flushing (step 89) the inert gas from the inert gas inlet (55) via the section of the gas valve unit (3) being downstream of the engine side access point (25B, 25B') out of the gaseous fuel system (7A).

13. A method for switching from gaseous fuel operation to liquid fuel operation by flushing an engine side of a vessel gas system (1) of a dual fuel internal combustion engine having a gaseous fuel system (7A) and a liquid fuel system, the method comprising:
providing (step 91) a vessel gas system (1) according to any one of claims 1 to 10 with a gas valve unit (3) having a block valve (39A) in a fuel line (21), a flushing valve system (59), and an inert gas inlet (55), and the gas valve unit (3) further being fluidly connected via a double walled fuel supply storage line (13) to a fuel gas storage unit (9) having a master gas valve (39B), a bleed valve (39C), and a safety bleed/venting line (41) as well as being fluidly connected via a double walled fuel supply engine line (15) to the gaseous fuel system (7A);
closing (step 93) the block valve (39A) and/or the master gas valve (39B);
configuring (step 95) the flushing valve system (59) to provide a fluid connection from the inert gas inlet (55) via the fuel line (21) to the gaseous fuel system (7A);
initiating (step 97) liquid fuel operation of the internal combustion engine;
providing (step 99) inert gas at the inert gas inlet (55) for flushing the inert gas from the inert gas inlet (55) together with remaining gaseous fuel from within the gas valve unit (3) to the charge air for the liquid fuel operation.

14. The method of claim 13, wherein the inert gas is added to the fuel line (21) of the gas valve unit (3) at a storage side access point (25A) upstream of the block valve (39A) and/or at an engine side access point (25B, 25B') downstream of the block valve (39A).

## Patentansprüche

1. Gassystem (1) für ein Wasserfahrzeug zur Versorgung eines Verbrennungsmotors mit gasförmigem Brennstoff, wobei das Gassystem (1) für ein Wasserfahrzeug umfasst:
eine Brenngasspeichereinheit (9) mit einem Haupt-Gasventil (39B);
eine doppelwandige Speicher-Brennstoffzufuhrleitung (13);
eine doppelwandige Gasventileinheit (3);
eine doppelwandige Motor-Brennstoffzufuhrleitung (15); und
ein Brenngassystem (7A);
wobei die doppelwandige Gasventileinheit (3) ein Gehäuse (23) umfasst, das eine Außenwand der doppelwandigen Gasventileinheit (3) bereitstellt und einen Brenngaseinlass (23A), einen Brenngasauslass (23B) und einen Inertgaseinlass (55) umfasst,
eine Brennstoffleitung (21), die mit dem Brenngaseinlass (23A) und dem Brenngasauslass (23B) in Fluidverbindung steht und sich innerhalb des Gehäuses (23) erstreckt, wodurch sie eine Innenwand der doppelwandigen Gasventileinheit (23A) bildet, wobei die Brennstoffleitung (21) ein Drosselventil (37) und ein Sperrventil (39A) umfasst,
eine Spülleitung (53), und
ein Spülventilsystem (59), wobei
die Spülleitung (53) mit dem Inertgaseinlass (55) in Fluidverbindung steht,
die Spülleitung (53) über das Spülventilsystem (59) mit einem speicherseitigen Eintrittspunkt (25A) der Brennstoffleitung (21) und mit einem motorseitigen Eintrittspunkt (25B, 25B') der Brennstoffleitung (21) in Fluidverbindung steht, und
der speicherseitige Eintrittspunkt (25A) strömungstechnisch zwischen dem Brenngaseinlass (23A) und dem Sperrventil (39A) positioniert ist und der motorseitige Eintrittspunkt (25B, 25B') strömungstechnisch zwischen dem Sperrventil (39A) und dem Brenngasauslass (23B) positioniert ist; und
der Brenngaseinlass (23A) der Brennstoffleitung (21) der doppelwandigen Gasventileinheit (3) über die doppelwandige Speicher-Brennstoffzufuhrleitung (13) mit dem Haupt-Gasventil (39B) der Brenngasspeichereinheit (9) in Fluidverbindung steht und der Brenngasauslass (23B) der Brennstoffleitung (21) der doppelwandigen Gasventileinheit (3) über die doppelwandige Motor-Brennstoffzufuhrleitung (15) mit dem Brenngassystem (7A) in Fluidverbindung steht.

2. Gassystem (1) für ein Wasserfahrzeug nach Anspruch 1, wobei das Drosselventil (37) strömungstechnisch zwischen dem Brenngaseinlass (23A) und dem Sperrventil (39A), und genauer zwischen dem speicherseitigen Eintrittspunkt (39A) und dem Sperrventil (25A) positioniert ist.

3. Gassystem (1) für ein Wasserfahrzeug nach Anspruch 1, wobei das Drosselventil (37) strömungstechnisch zwischen dem Sperrventil (39A) und dem Brenngasauslass (23B), und insbesondere zwischen dem motorseitigen Eintrittspunkt (25B') und dem Brenngasauslass (23B) positioniert ist.

4. Gassystem (1) für ein Wasserfahrzeug nach einem der vorstehenden Ansprüche, wobei das Spülventilsystem (59) umfasst:
ein erstes Spülventil (59A) zum Steuern der Fluidverbindung zwischen dem Inertgaseinlass und dem speicherseitigen Eintrittspunkt (25A), und
ein zweites Spülventil (59B, 59B') zum Steuern der Fluidverbindung zwischen dem Inertgaseinlass (55) und dem motorseitigen Eintrittspunkt (25B, 25B'),
wobei das erste Spülventil (59A) und/oder das zweite Spülventil (59B, 59B') insbesondere ein normalerweise geschlossenes Ventil sind.

5. Gassystem (1) für ein Wasserfahrzeug nach einem der vorstehenden Ansprüche, ferner umfassend:
ein oder mehrere Steuerelemente, ausgewählt aus der Gruppe von Steuerelementen, die Temperaturmesswandler (31), Druckmesswandler (33) und Druckindikatoren (35), die an der Brennstoffleitung (21) vorgesehen sind, umfasst; und/oder
einen Befestigungsabschnitt, an dem eine Filtereinheit (29) anzubringen ist, wobei der Befestigungsabschnitt insbesondere strömungstechnisch zwischen dem Brenngaseinlass (23A) und dem Drosselventil (37) positioniert ist.

6. Gassystem (1) für ein Wasserfahrzeug nach einem der vorstehenden Ansprüche, wobei das Gehäuse (23)
ein- oder mehrteilig ist und/oder aus einem Metall wie etwa Stahl gefertigt ist; und/oder
ferner mindestens zwei Druckluftsteueranschlüsse (47) zum Steuern des Sperrventils (39A) bzw. des Drosselventils (37), insbesondere durch Druckluft, umfasst; und/oder
ferner Steueranschlüsse umfasst, um das Spülventilsystem (59), wie etwa das erste Spülventil (59A) und/oder das zweite Spülventil (59B, 59B') insbesondere elektronisch zu steuern.

7. Gassystem (1) für ein Wasserfahrzeug nach einem der vorstehenden Ansprüche, wobei das Sperrventil (39A) das einzige Sperrventil in der Brennstoffleitung (21) ist und insbesondere als normalerweise geschlossenes Ventil konfiguriert ist, und/oder das Drosselventil (37) so konfiguriert ist, dass es für einen Druckabfall sorgt, um die Steuerung des Brenngasbetriebs zu ermöglichen.

8. Gassystem (1) für ein Wasserfahrzeug nach einem der vorstehenden Ansprüche, wobei
die Brenngasspeichereinheit (9) ferner ein Ablassventil (39C) und eine Sicherheits-Ablass-/-Entlüftungsleitung (41) umfasst, und
das Haupt-Gasventil (39B) und das Sperrventil (39A, 39A') ein Sperr- und Ablassventil-Doppelsystem bilden, bei dem das Ablassventil (39C) die Zwischen-Brennstoffverrohrung zwischen dem Haupt-Gasventil (39B) und dem Sperrventil (39A) mit der Sicherheits-Ablass-/-Entlüftungsleitung (41) verbindet; und
wobei das Haupt-Gasventil (39B) insbesondere ein normalerweise geschlossenes Ventil ist.

9. Gassystem (1) für ein Wasserfahrzeug nach einem der vorstehenden Ansprüche, ferner umfassend:
ein Überwachungssystem (17) zur Überwachung insbesondere der Luftdichtigkeit der doppelwandigen Gasventileinheit (3); und/oder
ein Inertgaszufuhrsystem (19), das mit dem Inertgaseinlass (55) des Gehäuses (23) der Gasventileinheit (3) in Fluidverbindung steht; und/oder
ein Instrumentenluftsystem (49) zum Steuern des Drosselventils (37) und/oder des Sperrventils (39A); und/oder
eine Steuereinheit zum Steuern des Betriebs des Sperrventils (39A), des Haupt-Gasventils (39B) und des Drosselventils (37).

10. Gassystem (1) für ein Wasserfahrzeug nach einem der vorstehenden Ansprüche, wobei das Brenngassystem (7A) ferner konfiguriert ist, Gas abzulassen, und insbesondere einen Entlüftungsauslass umfasst, zum Beispiel auf einer Seite stromabwärts vom Brenngassystem (7A).

11. Verfahren zum Spülen einer Gasspeicherseite eines Gassystems (1) für ein Wasserfahrzeug, wobei das Verfahren umfasst:
Versehen (Schritt 71) eines Gassystems (1) für ein Wasserfahrzeug nach einem der vorstehenden Ansprüche mit einer Gasventileinheit (3), die ein Sperrventil (39A) in einer Brennstoffleitung (21), ein Spülventilsystem (59) und einen Inertgaseinlass (55) aufweist, und wobei die Gasventileinheit (3) ferner strömungstechnisch über eine doppelwandige Speicher-Brennstoffzufuhrleitung (13) mit einer Gasspeichereinheit (9) verbunden ist, die ein Haupt-Gasventil (39B), ein Ablassventil (39C) und eine Sicherheits-Ablass-/-Entlüftungsleitung (41) aufweist;
Schließen (Schritt 73) des Sperrventils (39A);
Konfigurieren (Schritt 75) des Spülventilsystems (59) und des Ablassventils (39C) so, dass eine Fluidverbindung vom Inertgaseinlass (55) über einen speicherseitigen Eintrittspunkt (25A) der Brennstoffleitung (21) zur Sicherheits-Ablass-/-Entlüftungsleitung (41) der Brenngasspeichereinheit (9) bereitgestellt wird;
Bereitstellen (Schritt 77) von Inertgas am Inertgaseinlass (55); und
Spülen (Schritt 79) des Inertgases aus dem Inertgaseinlass (55) über den Abschnitt der Gasventileinheit (3), der stromaufwärts vom speicherseitigen Eintrittspunkt (25A) liegt, und über die doppelwandige Speicher-Brennstoffzufuhrleitung (13) aus der Brenngasspeichereinheit (9) über die Sicherheits-Ablass-/-Entlüftungsleitung (41).

12. Verfahren zum Spülen einer Motorseite eines Gassystems (1) für ein Wasserfahrzeug, wobei das Verfahren umfasst:
Versehen (Schritt 81) eines Gassystems (1) für ein Wasserfahrzeug nach einem der Ansprüche 1 bis 10 mit einer Gasventileinheit (3), die ein Sperrventil (39A) in einer Brennstoffleitung (21), ein Spülventilsystem (59) und einen Inertgaseinlass (55) aufweist, und wobei die Gasventileinheit (3) ferner über eine doppelwandige Motor-Brennstoffzufuhrleitung (15) mit einem Brenngassystem (7A) für einen Verbrennungsmotor (7) verbunden ist;
Schließen (Schritt 83) des Sperrventils (39A);
Konfigurieren (Schritt 85) des Spülventilsystems (59) so, dass eine Fluidverbindung vom Inertgaseinlass (55) über einen motorseitigen Eintrittspunkt (25B, 25B') der Brennstoffleitung (21) zu einem Entlüftungsauslass des Brenngassystems (7A) bereitgestellt wird;
Bereitstellen (Schritt 87) von Inertgas am Inertgaseinlass (55); und
Spülen (Schritt 89) des Inertgases aus dem Inertgaseinlass (55) über den Abschnitt der Gasventileinheit (3), der stromabwärts vom motorseitigen Eintrittspunkt (25B, 25B') liegt, aus dem Brenngassystem (7A).

13. Verfahren zum Umschalten von einem Brenngasbetrieb auf einen Flüssigbrennstoffbetrieb durch Spülen einer Motorseite eines Gassystems (1) für ein Wasserfahrzeug eines Verbrennungsmotors mit zwei verschiedenen Brennstoffen, der ein Brenngassystem (7A) und ein Flüssigbrennstoffsystem aufweist, wobei das Verfahren umfasst:
Versehen (Schritt 91) eines Gassystems (1) für ein Wasserfahrzeug nach einem der Ansprüche 1 bis 10 mit einer Gasventileinheit (3), die ein Sperrventil (39A) in einer Brennstoffleitung (21), ein Spülventilsystem (59) und einen Inertgaseinlass (55) aufweist, und wobei die Gasventileinheit (3) ferner strömungstechnisch über eine doppelwandige Speicher-Brennstoffzufuhrleitung (13) mit einer Gasspeichereinheit (9) verbunden ist, die ein Haupt-Gasventil (39B), ein Ablassventil (39C), und eine Sicherheits-Ablass-/-Entlüftungsleitung aufweist, und außerdem über eine doppelwandige Motor-Brennstoffzufuhrleitung (15) strömungstechnisch mit dem Brenngassystem (7A) verbunden ist;
Schließen (Schritt 93) des Sperrventils (39A) und/oder des Haupt-Gasventils (39B);
Konfigurieren (Schritt 95) des Spülventilsystems (59) so, dass eine Fluidverbindung vom Inertgaseinlass (55) über die Brennstoffleitung (21) zum Brenngassystem (7A) bereitgestellt wird;
Initiieren (Schritt 97) eines Flüssigbrennstoffbetriebs des Verbrennungsmotors;
Bereitstellen (Schritt (99) von Inertgas am Inertgaseinlass (55) zum Spülen des Inertgases aus dem Inertgaseinlass (55) zusammen mit verbliebenem gasförmigem Brennstoff aus der Gasventileinheit (3) in die Ladeluft für den Flüssigbrennstoffbetrieb.

14. Verfahren nach Anspruch 13, wobei das Inertgas an einem speicherseitigen Eintrittspunkt (25A) stromaufwärts vom Sperrventil (39A) und/oder an einem motorseitigen Eintrittspunkt (25B, 25B') stromabwärts vom Sperrventil (39A) in die Brennstoffleitung zugegeben wird.

## Revendications

1. Système de gaz de cuve (1) pour une fourniture d'un moteur à combustion interne avec du carburant gazeux, le système gazeux de cuve (1) comprenant :
une unité de stockage de gaz combustible (9) avec une soupape de gaz maître (39B) ;
une ligne de stockage d'alimentation en combustible à double paroi (13) ;
une unité de soupape de gaz à double paroi (3) ;
une conduite de moteur d'alimentation en carburant à double paroi (15) ; et
un système de carburant gazeux (7A) ;
dans lequel l'unité de soupape de gaz à double paroi (3) comprend un boîtier (23) fournissant une paroi externe de l'unité de soupape de gaz à double paroi (3) et comprenant une entrée de gaz combustible (23A), une sortie de gaz combustible (23B) et une entrée de gaz inerte (55),
une conduite de combustible (21) reliée fluidiquement à l'entrée de gaz combustible (23A) et à la sortie de gaz combustible (23B) et s'étendant à l'intérieur du boîtier (23), formant ainsi une paroi interne de l'unité de soupape de gaz à double paroi (3), la conduite de carburant (21) comprenant une soupape de régulation de débit (37) et une soupape d'arrêt (39A) ;
une conduite de rinçage (53), et
un système de soupape de rinçage (59), dans lequel
la conduite de rinçage (53) est reliée fluidiquement à l'entrée de gaz inerte (55),
la conduite de rinçage (53) est reliée fluidiquement par l'intermédiaire du système de soupape de rinçage (59) à un point d'accès latéral de stockage (25A) de la conduite de carburant (21) et à un point d'accès côté moteur (25B, 25B') de la conduite de carburant (21), et
le point d'accès côté stockage (25A) est positionnée fluidiquement entre l'entrée de gaz combustible (23A) et la soupape d'arrêt (39A) et le point d'accès côté moteur (25B, 25B') est positionné fluidiquement entre la soupape d'arrêt (39A) et la sortie de gaz combustible (23B) ; et
l'entrée de gaz combustible (23A) de la conduite de combustible (21) de l'unité de soupape de gaz à double paroi (3) est reliée fluidiquement à la soupape de gaz maître (39B) de l'unité de stockage de gaz combustible (9) par l'intermédiaire de la conduite de stockage d'alimentation en combustible à double paroi (13) et la sortie de gaz combustible (23B) de la conduite de carburant (21) de l'unité de soupape de gaz à double paroi (3) est reliée fluidiquement avec le système de carburant gazeux (7A) par l'intermédiaire de la conduite de moteur d'alimentation en carburant à double paroi (15).

2. Système de gaz de cuve (1) selon la revendication 1, dans lequel la soupape de régulation de débit (37) est positionnée de manière fluidique entre l'entrée de gaz combustible (23A) et la soupape d'arrêt (39A), et en particulier entre le point d'accès côté stockage (25A) et la soupape d'arrêt (39A).

3. Système de gaz de cuve (1) selon la revendication 1, dans lequel la soupape de régulation de débit (37) est positionnée de manière fluidique entre la soupape d'arrêt (39A) et la sortie de gaz combustible (23B), et en particulier entre le point d'accès côté moteur (25B') et la sortie de gaz combustible (23B).

4. Système de gaz de cuve (1) selon l'une quelconque des revendications précédentes, dans lequel le système de soupape de rinçage (59) comprend :
une première soupape de rinçage (59A) pour commander la connexion fluidique entre l'entrée de gaz inerte (55) et le point d'accès côté stockage (25A), et
une seconde soupape de rinçage (59B, 59B') pour commander la connexion fluidique entre l'entrée de gaz inerte (55) et le point d'accès côté moteur (25B, 25B'),
dans lequel la première soupape de rinçage (59A) et/ou la seconde soupape de rinçage (59B, 59B') étant en particulier une soupape normalement fermée.

5. Système de gaz de cuve (1) selon l'une quelconque des revendications précédentes, comprenant en outre :
un ou plusieurs éléments de commande choisis dans le groupe d'éléments de commande comprenant des transducteurs de température (31), des transducteurs de pression (33) et des indicateurs de pression (35) prévus au niveau de la conduite de carburant (21) ; et/ou
une section de montage pour avoir une unité de filtre (29) montée sur celle-ci, dans lequel la section de montage est en particulier positionnée de manière fluidique entre l'entrée de gaz combustible (23A) et la soupape de régulation de débit (37).

6. Système de gaz de cuve (1) selon l'une quelconque des revendications précédentes, dans lequel le boîtier (23)
est constitué d'une ou de plusieurs parties et/ou d'un métal tel que l'acier ; et/ou
comprend en outre au moins deux orifices de régulation de l'air sous pression (47) pour une commande de la soupape d'arrêt (39A) et de la soupape de régulation de débit (37), respectivement, en particulier de l'air comprimé ; et/ou
comprend en outre des orifices de régulation pour commander, en particulier électroniquement, le système de soupape de rinçage (59) tel que la première soupape de rinçage (59A) et/ou la seconde soupape de rinçage (59B, 59B').

7. Système de gaz de cuve (1) selon l'une quelconque des revendications précédentes, dans lequel la soupape d'arrêt (39A) est la seule soupape d'arrêt dans la conduite de carburant (21) et est en particulier configurée comme une soupape normalement fermée et/ou la soupape de régulation de débit (37) est configurée pour fournir une chute de pression pour permettre le contrôle du fonctionnement à carburant gazeux.

8. Système de gaz de cuve (1) selon l'une quelconque des revendications précédentes, dans lequel :
l'unité de stockage de gaz combustible (9) comprend en outre une soupape de purge (39C) et une conduite de purge/évacuation de sécurité (41), et
la soupape de gaz maître (39B) et la soupape d'arrêt (39A, 39A') forment un système double à soupape d'arrêt et de purge comportant la soupape de purge (39C) reliant la canalisation de carburant intermédiaire entre la soupape de gaz maître (39B) et la soupape d'arrêt (39A, 39A') avec la conduite de purge/évacuation de sécurité (41) ; et
dans lequel la soupape de gaz maître (39B) est en particulier une soupape normalement fermée.

9. Système de gaz de cuve (1) selon l'une quelconque des revendications précédentes, comprenant en outre :
un système de surveillance (17) pour surveiller notamment l'imperméabilité à l'air de l'unité de soupape de gaz à double paroi (3) ; et/ou
un système d'alimentation en gaz inerte (19) raccordé fluidiquement à l'entrée de gaz inerte (55) du boîtier (23) de l'unité de soupape de gaz (3) ; et/ou
un système d'air instrumenté (49) pour commander la soupape de régulation de débit (37) et/ou la soupape d'arrêt (39A) ; et/ou
une unité de commande pour commander le fonctionnement de la soupape d'arrêt (39A), de la soupape de gaz maître (39B) et de la soupape de régulation de débit (37).

10. Système de gaz de cuve (1) selon l'une quelconque des revendications précédentes, dans lequel le système de combustible gazeux (7A) est en outre configuré pour libérer du gaz, et comprend en particulier une sortie d'évacuation, par exemple au niveau d'un côté aval du système de combustible gazeux (7A).

11. Procédé pour rincer un côté stockage de gaz d'un système de gaz de cuve (1), le procédé comprenant :
une fourniture (étape 71) d'un système de gaz de cuve (1) selon l'une quelconque des revendications précédentes avec une unité de soupape de gaz (3) ayant une soupape d'arrêt (39A) dans une conduite de carburant (21), un système de soupape de rinçage (59), et une entrée de gaz inerte (55), et l'unité de soupape de gaz (3) en outre connectée fluidiquement par l'intermédiaire d'une conduite de stockage d'alimentation en combustible à double paroi (13) à une unité de stockage de gaz combustible (9) ayant une soupape de gaz maître (39B), une soupape de purge (39C), et une soupape de purge/évacuation de sécurité (41) ;
une fermeture (étape 73) de la soupape d'arrêt (39A) ;
une configuration (étape 75) du système de soupape de rinçage (59) et de la soupape de purge (39C) pour fournir une connexion fluidique à partir de l'entrée de gaz inerte (55) par l'intermédiaire d'un point d'accès côté stockage (25A) de la conduite de carburant (21) à la conduite de purge/évacuation de sécurité (41) de l'unité de stockage de gaz combustible (9) ;
une fourniture (étape 77) d'un gaz inerte au niveau de l'entrée de gaz inerte (55) ; et
un rinçage (étape 79) du gaz inerte de l'entrée de gaz inerte (55) par l'intermédiaire de la section de l'unité de soupape de gaz (3) étant en amont du point d'accès côté stockage (25A) et par l'intermédiaire de la conduite de stockage d'alimentation en combustible à double paroi (13) hors de l'unité de stockage de gaz combustible (9) par l'intermédiaire de la conduite de purge/évacuation de sécurité (41).

12. Procédé de rinçage d'un côté moteur d'un système de gaz de cuve (1), le procédé comprenant :
une fourniture (étape 81) d'un système de gaz de cuve (1) selon l'une quelconque des revendications 1 à 10 avec une unité de soupape de gaz (3) ayant une soupape d'arrêt (39A) dans une conduite de carburant (21), un système de soupape de rinçage (59), et une entrée de gaz inerte (55), et l'unité de soupape de gaz (3) étant en outre connectée fluidiquement par l'intermédiaire d'une conduite de moteur d'alimentation en combustible à double paroi (15) vers un système de combustible gazeux (7A) d'un moteur à combustion interne (7) ;
une fermeture (étape 83) de la soupape d'arrêt (39A) ;
une configuration (étape 85) du système de soupape de rinçage (59) pour fournir une connexion fluidique à partir de l'entrée de gaz inerte (55) par l'intermédiaire d'un point d'accès côté moteur (25B, 25B') de la conduite de carburant (21) à la sortie d'évacuation du système de combustible gazeux (7A) ;
une fourniture (étape 87) du gaz inerte au niveau de l'entrée de gaz inerte (55) ; et un rinçage (étape 89) du gaz inerte à partir de l'entrée de gaz inerte (55) par l'intermédiaire de la section de l'unité de soupape de gaz (3) étant en aval du point d'accès côté moteur (25B, 25B') hors du système de combustible gazeux (7A).

13. Procédé de commutation d'un fonctionnement à carburant gazeux vers un fonctionnement à carburant liquide par rinçage d'un côté moteur d'un système de gaz de cuve (1) d'un moteur à double combustion interne à combustible comportant un système de combustible gazeux (7A) et un système de carburant liquide, le procédé comprenant :
une fourniture (étape 91) d'un système de gaz de cuve (1) selon l'une quelconque des revendications 1 à 10 avec une unité de soupape de gaz (3) ayant une soupape d'arrêt (39A) dans une conduite de carburant (21), un système de soupape de rinçage (59), et une entrée de gaz inerte (55), et l'unité de soupape de gaz (3) en outre étant connectée fluidiquement par l'intermédiaire d'une conduite de stockage d'alimentation en combustible à double paroi (13) à une unité de stockage de gaz combustible (9) ayant une soupape de gaz maître (39B), une soupape de purge (39C), et une conduite de purge/évacuation de sécurité (41) ainsi qu'étant connectée fluidiquement par l'intermédiaire d'une conduite de moteur d'alimentation en combustible (15) au système de combustible gazeux (7A) ;
une fermeture (étape 93) de la soupape d'arrêt (39A) et/ou la soupape de gaz maître (39B) ;
une configuration (étape 95) du système de soupape de rinçage (59) pour fournir une connexion fluidique à partir de l'entrée de gaz inerte (55) par l'intermédiaire d'une conduite de carburant (21) au système de combustible gazeux (7A) ;
une initiation (étape 97) du fonctionnement à carburant liquide du moteur à combustion interne ;
une fourniture (étape 99) du gaz inerte au niveau de l'entrée de gaz inerte (55) pour rincer le gaz inerte de l'entrée de gaz inerte (55) conjointement avec le combustible gazeux restant provenant de l'intérieur de l'unité de soupape de gaz (3) vers l'air de suralimentation pour le fonctionnement à combustible liquide.

14. Procédé selon la revendication 13, dans lequel le gaz inerte est ajouté à la conduite de carburant (21) de l'unité de soupape de gaz (3) au niveau d'un point d'accès côté stockage (25A) en amont de la soupape d'arrêt (39A) et/ou d'un point d'accès côté moteur (25B, 25B') en aval de la soupape d'arrêt (39A).
